# EUROPÄISCHE PATENTSCHRIFT

(11) **EP 4 183 841 B1**
(45) Veröffentlichungstag und Bekanntmachung des Hinweises auf die Patenterteilung: **04.06.2025**
(21) Anmeldenummer: 21208770.4
(22) Anmeldetag: 17.11.2021
(51) Int. Cl.: C09D 5/00

(54) **INTUMESZENZKLEBER AUF WÄSSRIGER BASIS**
WATER-BASED INTUMESCENT ADHESIVE
ADHÉSIF INTUMESCENT À BASE AQUEUSE

(43) Veröffentlichungstag der Anmeldung: 24.05.2023
(73) Patentinhaber: Wolman Wood and Fire Protection GmbH, 76547 Sinzheim (DE)
(72) Erfinder: Graf, Robert, 89296 Osterberg (DE); Grözinger, Karl, 89257 Illertissen (DE)
(74) Vertreter: Sika Patent Attorneys

(56) Entgegenhaltungen:
- EP-A1- 3 301 138
- EP-A1- 3 805 325
- WO-A1-2012/123772
- WO-A1-2012/168347

## Beschreibung

Die vorliegende Erfindung bezieht sich auf Intumeszenzkleber in der Form wässriger Dispersionen zur Herstellung von Verbundstoffen mit guten Wärmedämmeigenschaften und hoher Brandschutzleistung.

Zu Wärmedämmzwecken wird in Hohlräumen von Gebäuden seit vielen Jahren rieselfähiges Dämmmaterial eingebracht. Bevorzugt sind dabei insbesondere solche Dämmstoffe die niedrige Wärmeleitfähigkeit besitzen, um mit geringen Dämmdicken möglichst hohe Dämmleistungen zu erreichen. Gleichzeitig wichtig ist eine hohe Rieselfähigkeit der Dämmstoffe, damit sämtliche Hohlräume rasch und vollständig verfüllt werden können. Weiterhin soll nach der Verfüllung der Hohlräume kein weiteres Absetzen bei Gebäudeschwingungen erfolgen, um die Entstehung ungedämmter Gebäudeteile zu vermeiden.

Diese Vorgaben werden sehr gut mit kugelförmigen Perlen aus expandiertem Polystyrol (EPS) erfüllt. EPS Perlen sind in verschiedenen Durchmesserbereichen und Schüttdichten, beispielsweise unter der Bezeichnung Neopor, erhältlich. Zu diesem Zweck eingesetzte Perlen haben üblicherweise einen Außendurchmesser von 3 - 5 mm und eine Schüttdichte von 10 - 14 g/l. Solche Perlen sind in bestimmten Ausführungsformen auch mit verbessertem Brandverhalten erhältlich. Mit diesen Dämmungen werden zwei essentielle Grundanforderungen an Bauprodukte erfüllt, die des Wärme- und die des Brandschutzes.

Ein wesentlicher Nachteil der mit rieselfähigen Dämmstoffen gedämmten Hohlräume besteht darin, dass bei der Öffnung eines auf diese Weise verfüllten Hohlraums, beispielsweise wenn ein Fenster in ein Bauteil eingebaut werden soll, die Wärmedämmung aufgrund der ausgezeichneten Rieselfähigkeit ausrieseln wird.

Dieser Nachteil ist bisher dadurch behoben worden, dass beim Einbringen der EPS Perlen die Dämmstoffpartikel mit einem Klebstoff vermischt wurden, der nach der Positionierung der Perlen aushärtet und somit ein späteres Ausrieseln der Dämmstoffperlen verhindert.

Zu diesem Zweck wurden bisher als Klebstoffe handelsübliche, wässrige Polymerdispersionen eingesetzt. Besonders geeignet sind hierzu beispielsweise Polyvinylalkohol- oder Polyvinylacetatdispersionen. Pro Kubikmeter EPS Perlen werden zur Verklebung 5 - 7 kg solcher i.d.R. 50%igen Dispersionen eingesetzt.

Die derzeit eingesetzten brennbaren Kleber weisen allerdings den Nachteil auf, dass sie das Brandverhalten der Dämmstoffe verschlechtern. Selbst EPS Perlen deren Brandverhalten ohne Kleber der Bauproduktenklasse E nach EN 13501-1 genügt, erfüllen diese Anforderung nach der Verklebung mit den genannten Dispersionen nicht mehr.

In der Druckschrift AU-A-50265/93 wird versucht, den Nachteil der brennbaren Kleber durch Zusatz von Flammschutzmitteln zu kompensieren. Allerdings sind von den dort genannten Flammschutzmitteln zum Erreichen nennenswerter Effekte hohe Konzentrationen erforderlich, was wiederum die Dosierung der Kleber / Flammschutzmittelmischungen erschwert.

Die Druckschrift WO2012168347A1 (Akzo Nobel Chemicals International B.V.) offenbart ein pulverförmiges Zusatzstoff zur Verbesserung der Haftung von Baustoffzusammensetzungen, wobei das Zusatzstoff ein Polysaccharid und einen Weichmacher umfasst, der aus der Gruppe der vollständig oder teilweise verseiften Polyvinylalkohole und deren Derivate ausgewählt werden kann. Dieser Zusatzstoff weist jedoch keine feuerhemmenden Eigenschaften auf. Die Druckschrift WO2012123772A1 (Rudolf Hensel GmbH) offenbart dagegen eine wässrige Brandschutzbeschichtung, die Isolierschichten bildet. In einer der Ausführungsformen umfasst diese Beschichtung neben ein Silikonharz-Emulsion als Bindelmittel, eine wässrige organische Polymerdispersion, Kohlenhydrate und eine säurespendende Substanz. Trotz der Anwesenheit eines Silikonharzes als Bindemittel zur verbesserten mechanischen Stabilität der Isolierschicht wird die Zusammensetzung nur als Beschichtung verwendet.

In der Druckschrift US 2009/0246445 A1 wird beschrieben wie stückiges Recycling EPS zunächst mit bekannten dämmschichtbildenden Brandschutzbeschichtungen beschichtet und getrocknet wird. Danach werden die so vorbereiteten Partikel mit einem Bindemittel zu Dämmstoffpaketen verklebt wodurch Dämmstoffe mit verbessertem Brandverhalten erhalten werden.

Auch EPS Perlen lassen sich mit bekannten dämmschichtbildenden Beschichtungen verkleben und erreichen hierdurch ein deutlich verbessertes Brandverhalten. Solche dämmschichtbildenden Formulierungen sind dem Fachmann bekannt und werden beispielsweise in der EP 0582 604 B1 beschrieben. Um jedoch einerseits die Rieselfähigkeit der mit Kleber beaufschlagten EPS Perlen zu erhalten und andererseits die Kosten für den Kleber in einem akzeptablen Bereich zu halten, müssen diese Beschichtungen sehr stark mit Wasser verdünnt werden.

Bei der Formulierung dämmschichtbildender Beschichtungen wird großer Wert darauf gelegt möglichst wasserunlösliche Aktivstoffe einzusetzen, um deren Dauerhaftigkeit unter dem Einfluss von Atmosphärilien zu erhöhen. Dies erweist sich jedoch bei der o.g. starken Verdünnung als Nachteil, da es zu rascher Sedimentation der wasserunlöslichen Substanzen kommt, was bisher die Dosierung eines homogenen dämmschichtbildenden Klebers nahezu unmöglich gemacht hat. Weiterhin kommt es mit solchen Formulierungen, die wasserunlösliche Feststoffpartikel enthalten, bei der Applikation des Klebers häufig zu Verstopfungen an den Leitungen und insbesondere an den Sprühdüsen mit deren Hilfe der Kleber auf die EPS Perlen verteilt wird.

Eine wichtige Aufgabe bei der Entwicklung verbesserter Formulierungen ist es daher, brandschützende, dämmschichtbildende Kleber zu entwickeln, deren sämtliche Inhaltsstoffe wasserlöslich sind. Bei solchen Formulierungen kann es weder bei der Verdünnung noch bei der Applikation zu den bisher beobachteten Verarbeitungsschwierigkeiten kommen, die sich aus der mangelnden Homogenität des Klebers ergeben hatten.

Die vorliegende Aufgabe wird überraschenderweise durch die im Folgenden beschriebenen, wässrigen Zusammensetzungen gelöst, die vorzugsweise als wässrige Dispersionen vorliegen. Die erfindungsgemäßen wässrigen Dispersionen beinhalten ausschließlich wasserlösliche Komponenten und erfüllen trotzdem die gewünschten Brandschutzeigenschaften, so dass hierdurch erstmals leistungsfähige Intumeszenzkleber aus wässrigen Dispersionen für diesen Verwendungszweck bereitgestellt werden.

Beansprucht wird daher insbesondere in einem ersten Aspekt der Erfindung eine wässrige Dispersion, die folgende Komponenten umfasst:
a) mindestens ein Bindemittel in Dispersionsform
b) mindestens ein wasserlösliches Salz der Phosphorsäure
c) mindestens ein wasserlösliches Kohlenhydrat, das ein Disaccharid ist
d) gegebenenfalls mindestens ein wasserlösliches Ammoniumsalz und/oder mindestens eine Aminoverbindung, wobei das mindestens eine Bindemittel in Dispersionsform eine stabilisierte Dispersion enthaltend ein Copolymerisat aus Vinylacetat und einem Vinylester einer weiteren langkettigen Carbonsäure, umfasst.

In einer bevorzugten Ausführungsform umfasst das mindestens eine Bindemittel in Dispersionsform eine stabilisierte Dispersion enthaltend ein Copolymer, welches durch Copolymerisation von Vinylacetat und einem Vinylester der Neodecansäure erhalten wird.

In einer weiteren bevorzugten Ausführungsform liegt das mindestens eine Bindemittel in Dispersionsform in einer Menge von 5 bis 40 Gewichtsteilen, vorzugsweise 10 bis 20 Gewichtsteile, bezogen auf die wässrige Dispersion, vor.

In einer weiteren bevorzugten Ausführungsform umfasst das mindestens eine wasserlösliche Salz der Phosphorsäure ein Ammoniumsalz der Phosphorsäure, vorzugsweise Monoammoniumphosphat.

In einer weiteren bevorzugten Ausführungsform beträgt die Menge an Monoammoniumphosphat 5 bis 30 Gewichtsteile, vorzugsweise 10 bis 20 Gewichtsteile, bezogen auf die wässrige Dispersion.

In einer weiteren bevorzugten Ausführungsform liegt das mindestens eine wasserlösliche Kohlenhydrat, das ein Disaccharid ist, in einer Menge von 2 bis 20 Gewichtsteilen, vorzugsweise 3 bis 10 Gewichtsteilen, bezogen auf die wässrige Dispersion vor.

In einer weiteren bevorzugten Ausführungsform beinhaltet das mindestens eine wasserlösliche Kohlenhydrat, das ein Disaccharid ist, Saccharose.

In einer weiteren bevorzugten Ausführungsform liegt das mindestens eine wasserlösliche Ammoniumsalz und/oder die mindestens eine Aminoverbindung in einer Menge von 0 bis 10 Gewichtsteilen, vorzugsweise 2 bis 5 Gewichtsteilen, bezogen auf die wässrige Dispersion vor.

In einer weiteren bevorzugten Ausführungsform beinhaltet das mindestens eine wasserlösliche Ammoniumsalz und/oder die mindestens eine Aminoverbindung Harnstoff.

In einem weiteren Aspekt der vorliegenden Erfindung wird ein Verfahren zur Herstellung eines brandgeschützten Dämmstoffs beansprucht, umfassend die Schritte:
- Mischen eines expandierten Styrolpolymers mit der erfindungsgemäßen wässrigen Dispersion,
- Informbringen der erhaltenen Mischung, und
- Verfestigen der Mischung, vorzugsweise durch Trocknen der Mischung.

In einem weiteren Aspekt der vorliegenden Erfindung wird ein Verbundmaterial beansprucht, umfassend ein expandiertes Styrolpolymer und einen Intumeszenzkleber, dadurch erhältlich, dass das expandierte Styrolpolymer mit der erfindungsgemäßen wässrigen Dispersion gemischt wird, die erhaltene Mischung in Form gebracht wird und anschließend getrocknet wird.

In einem weiteren Aspekt der vorliegenden Erfindung wird die Verwendung der erfindungsgemäßen, wässrigen Dispersion als Intumeszenzkleber beansprucht, dadurch gekennzeichnet, dass die wässrige Dispersion als flüssiger Kleber mit einem Dämmstoffmaterial gemischt wird, in Form gebracht wird und anschließend getrocknet wird, um einen brandgeschützten Dämmstoff zu erhalten.

In einer weiteren bevorzugten Ausführungsform umfasst das Schaumstoffmaterial expandiertes Polystyrol und der Dämmstoff wird zur Dämmung von zweischaligem Mauerwerk eingesetzt.

Nachfolgend wird die vorliegende Erfindung näher beschrieben:
Der Begriff "Dispersion" wie hier verwendet bezeichnet dispergierte Polymertröpfchen in einer wässrigen Phase.

Der Begriff "stabilisierte Dispersion" wie hier verwendet bezeichnet homogene Dispersionen die verträglich mit in Wasser gelösten Salzen sind.

Der Begriff "in Dispersionsform" bzw. "in dispergierter Form" wird in der hier vorliegenden Erfindung für stabilisierte Dispersionen verwendet.

Der Begriff "Bindemittel" wie hier verwendet bezeichnet stabilisierte Dispersionen.

Der Begriff "wasserlöslich" wird im Rahmen der vorliegenden Erfindung für verschiedene Komponenten des beanspruchten wässrigen Klebers verwendet. Der Begriff "Wasserlöslichkeit" bezieht sich daher auf das Lösungsverhalten einzelner Komponenten und definiert sowohl gelöste als auch stabil dispergierte Komponenten im Kleber.

Der Begriff "Intumeszenzkleber" ist dem Durchschnittsfachmann geläufig und bezieht sich auf eine klebrige oder klebende Zusammensetzung bzw. ein klebriges bzw. klebendes Material, welche(s) zusätzliche feuerhemmende Eigenschaften aufweist. Der Intumeszenzkleber weist eine klebrige bzw. klebende Komponente auf, die chemisch härtet und/oder physikalisch abbindet. Vorzugsweise erfolgt das Verfestigen einer Polymerkomponente oder auch einer wässrigen Dispersion durch Trocknung des Lösemittels, insbesondere Wasser. Der Intumeszenzkleber entfaltet seine feuerhemmende Wirkung unter Hitzeeinwirkung, insbesondere unter Brandeinwirkung, indem er das Volumen deutlich vergrößert und/oder durch Freisetzung einer Säure und Verkohlung einer organischen Komponente, wodurch eine feuerhemmende Schutzschicht aus Asche bzw. Kohle gebildet wird, wodurch ein Weiteres Versengen, Brennen, Entflammen oder Ausbreiten des Feuers verhindert wird.

Der Begriff "Brandschutz" bzw. "brandgeschützt" bezieht sich in der vorliegenden Erfindung auf die Eigenschaft eines Produkts bzw. Verbundmaterials, die Brandschutzanforderungen der Brandschutzklasse E nach EN 13501-1 voll zu erfüllen.

Die erfindungsgemäßen, wässrigen Dispersionen enthalten als essentielle Komponente ein Dispersionsbindemittel, oder Bindemittel in Dispersionsform, welches für die Klebewirkung bzw. Klebrigkeit der wässrigen Dispersion sorgt.

Das Dispersionsbindemittel muss eine hohe Salzverträglichkeit aufweisen. Um diese Eigenschaft zu erzielen werden in der vorliegenden Erfindung entsprechend stabilisierte Dispersionen mit Copolymerisaten aus Vinylacetat und einem Vinylester einer weiteren langkettigen Carbonsäure, eingesetzt. Demzufolge ist das Bindemittel in Dispersionsform bevorzugt ein radikalisches Emulsionspolymerisat, welche durch radikalische Polymerization mindestens zweier Monomere erhalten wird. Geeignete Polymerisationsmethoden, wie zum Beispiel Substanz-, Lösungs-, Suspensions- oder Emulsionspolymerisation sind dem Fachmann bekannt.

Das Hauptmonomer ist Vinylacetat. Das Comonomer ist ein Vinylester einer langkettigen Carbonsäure, wie zum Beispiel Neodecansäure oder Versatic-Säure. Die bevorzugten Comonomere der Vinylester der Neodecansäure stellen isomere Mischungen mit 10 Kohlenstoffatomen dar und sind kommerziell erhältlich (VeoVa; Hexion Specialty Chemicals, Ohio, USA). Sie können in dieser Form zur Herstellung des Bindemittels in Dispersionsform für die erfindungsgemäßen, wässrigen Dispersionen verwendet werden, enthaltend die bevorzugten Copolymerisate aus Vinylacetat und Vinylestern der Neodecansäure.

Das Bindemittel in Dispersionsform kann als Copolymerisat durch Lösungspolymerisation mit anschließender Dispergierung in Wasser oder besonders bevorzugt durch Emulsionspolymerisation erhalten werden, so dass das wässrige Bindemittel als Copolymerdispersion vorliegt.

Die Emulsionspolymerisation kann diskontinuierlich, mit oder ohne Verwendung von Saatlatices, unter Vorlage aller oder einzelner Bestandteile des Reaktionsgemisches, oder bevorzugt unter teilweise Vorlage und Nachdosierung der oder einzelner Bestandteile des Reaktionsgemisches, oder nach dem Dosierverfahren ohne Vorlage durchgeführt werden. Die Monomeren können bei der Emulsionspolymerisation wie üblich in Gegenwart eines wasserlöslichen Initiators und eines Emulgators bei vorzugsweise 30 bis 95° C polymerisiert werden. Geeignete Initiatoren sind z. B. Natrium-, Kalium- und Ammoniumpersulfat, tert.- Butylhydroperoxide, wasserlösliche Azoverbindungen oder auch Redoxinitiatoren wie H₂O₂/Ascorbinsäure.

Als Emulgatoren dienen z. B. Alkalisalze von längerkettigen Fettsäuren, Alkylsulfate, Alkyksulfonate, alkylierte Arylsulfonate oder alkylierte Biphenylethersulfonate. Des Weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wässrigen Sekundärdispersionen wird das Copolymerisat zunächst durch Lösungspolymerisation in einem organischen Lösungsmittel hergestellt und anschließend unter Zugabe von Salzbildem, z. B. von Ammoniak, zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wässrigen Sekundärdispersionen ist dem Fachmann bekannt und z. B. in der DE-A-37 20 860 beschrieben. Zur Einstellung des Molekulargewichts können bei der Polymerisation Regler eingesetzt werden. Geeignet sind z. B. -SH enthaltende Verbindungen wie Mercaptoethanol, Mercaptopropanol, Thiophenol, sowie Thioglykolsäureester.

In den bevorzugten Ausführungsformen liegt das mindestens eine Bindemittel in Dispersionsform in einer Menge von 5 bis 40 Gewichtsteilen, bevorzugt 7 bis 25 Gewichtsteilen, besonders bevorzugt 10 bis 20 Gewichtsteilen, und am meisten bevorzugt 12 bis 16 Gewichtsteilen, bezogen auf die Gesamtmenge der wässrigen Dispersion, vor.

Als wasserlösliches Salz der Phosphorsäure können in der vorliegenden Erfindung insbesondere solche Verbindungen eingesetzt werden, die in der Lage sind, Phosphorsäure und/oder Oligophosphorsäure und/oder Polyphosphorsäure freizusetzen. Solche Substanzen sind insbesondere Ammoniumphosphate, also Ammoniumsalze der Phosphorsäure, Oligophosphorsäure und/oder Polyphosphorsäure, wobei Ammoniumsalze der Phosphorsäure bevorzugt sind. Besonders bevorzugt im Rahmen der vorliegenden Erfindung sind Monoammoniumphosphat, Diammoniumphosphat oder Mischungen aus diesen Verbindungen. Diese Substanzen können bevorzugt in kondensierter Form vorliegen.

Das mindestens eine wasserlösliche Salz der Phosphorsäure ist in einer Menge bzw. in einem Gewicht von 5 bis 30 Gewichtsteilen, besonders bevorzugt 7 bis 27 Gewichtsteilen, und ganz besonders bevorzugt 10 bis 20 Gewichtsteilen enthalten. Am meisten bevorzugt sind 12 bis 17 Gewichtsteile, wobei sich diese Zahlenangaben auf die Menge an wasserlöslichem Salz der Phosphorsäure bezogen auf die Gesamtmenge des Klebers beziehen.

Als wasserlösliches Kohlenhydrat kommen generell kohlenstoffhaltige Substanzen mit veresterbaren Hydroxylgruppen in Frage. Denkbar sind beispielsweise Kohlenhydrate, Stärke, Zucker und Cellulose, insbesondere aber wasserlösliche Kohlenhydrate im engeren Sinne also Kohlenhydrate im Sinne der Saccharide.

Als Kohlenhydrat im Sinne der vorliegenden Erfindung werden daher insbesondere Biomoleküle bezeichnet, die aus Kohlenstoff, Wasserstoff und Sauerstoff bestehen und typischerweise ein Wasserstoff-Sauerstoff Verhältnis von 2:1 aufweisen und daher der empirischen Formel Cₘ(H₂O)ₙ, in welcher sich m von n unterscheiden kann, aber nicht muss, entsprechen.

Bevorzugt sind insbesondere mehrwertige Alkohole oder Mischungen davon, also Oligosaccharide, wovon wiederum vierwertige Alkohole, wie beispielsweise Pentaerythrit einsetzbar sind. Als weitere bevorzugte Substanz ist Dipentaerythrit zu nennen.

Am meisten bevorzugt als wasserlösliche Kohlenhydrate sind allerdings Monosaccharide und Disaccharide. Monosaccharide weisen eine Kette von drei Kohlenstoffatomen als Grundgerüst auf und haben zusätzlich eine Carbonylgruppe und eine Hydroxygruppe. Im Rahmen der vorliegenden Erfindung geeignete Monosaccharide sind Glucose, Fructose, Galactose, Erythrose, Threose, Arabinose, Xylose, Mannose, und ähnliche. Besonders bevorzugt sind Glucose, Fructose, Mannose und Galactose, wobei Glucose bei den Monosacchariden am meisten bevorzugt ist.

Disaccharide entstehen durch Verknüpfung zweiter Monosaccharide bzw. sind aus diesen zumindest aufgebaut. Geeignete Disaccharide umfassen beispielsweise Cellobiose, Lactose, Trehalose, Saccharose, Maltose, und ähnliche. Besonders bevorzugt als wasserlösliches Kohlenhydrat im Rahmen der vorliegenden Erfindung ist als Disaccharid Saccharose.

Das mindestens eine wasserlösliche Kohlenhydrat ist in einer Menge bzw. in einem Gewicht von 2 bis 20 Gewichtsteilen, besonders bevorzugt 3 bis 18 Gewichtsteile, und ganz besonders bevorzugt 3 bis 10 Gewichtsteile enthalten. Am meisten bevorzugt sind 3 bis 8 Gewichtsteile, wobei sich diesen Zahlenangaben auf die Menge an wasserlöslichem Kohlenhydrat bezogen auf die Gesamtmenge des Klebers beziehen.

Im Rahmen der vorliegenden Erfindung können gegebenenfalls mindestens ein zusätzliches wasserlösliches Ammoniumsalz und/oder mindestens eine zusätzliche Aminoverbindung in der wässrigen Dispersion gemäß der vorliegenden Erfindung enthalten sein. Diese zusätzliche Komponente in den wässrigen Dispersionen der vorliegenden Erfindung ist also optional.

Im Rahmen der vorliegenden Erfindung können gegebenenfalls mindestens ein zusätzliches wasserlösliches Ammoniumsalz und/oder mindestens eine zusätzliche Aminoverbindung in der wässrigen Dispersion gemäß der vorliegenden Erfindung enthalten sein. Diese zusätzliche Komponente in den wässrigen Dispersionen der vorliegenden Erfindung ist also optional. Als bevorzugte Ammoniumsalze bzw. Aminoverbindungen können Monoammoniumphosphat, Harnstoff, Biuret, Guanidin, Melamin, Ammoniumsulfat eingesetzt werden. Ganz besonders bevorzugt ist Monoammoniumphosphat. Eine weiteres besonders bevorzugtes wasserlösliches Ammoniumsalz bzw. eine besonders bevorzugte zusätzliche Aminoverbindung stellt im Rahmen der vorliegenden Erfindung Harnstoff dar.

Das mindestens eine wasserlösliche Ammoniumsalz bzw. die mindestens eine zusätzliche Aminoverbindung ist in einer Menge bzw. in einem Gewicht von 0 bis 12 Gewichtsteilen, besonders bevorzugt 0 bis 10 Gewichtsteilen, und ganz besonders bevorzugt 0 bis 8 Gewichtsteilen enthalten. Am meisten bevorzugt sind 1 bis 7 Gewichtsteile, wobei sich diesen Zahlenangaben auf die Menge bzw. das Gewicht an wasserlöslichem Ammoniumsalz und/oder Aminoverbindung bezogen auf die Gesamtmenge des Klebers beziehen.

Die erfindungsgemäßen wässrigen Dispersionen können optional neben den oben beschriebenen Komponenten (Bindemittel in Dispersionsform, wobei das mindestens eine Bindemittel in Dispersionsform eine stabilisierte Dispersion enthaltend ein Copolymerisat aus Vinylacetat und einem Vinylester einer weiteren langkettigen Carbonsäure, wasserlösliches Salz der Phosphorsäure, wasserlösliches Kohlenhydrat, das ein Disaccharid ist, und das optionale wasserlösliche Ammoniumsalz und/oder Aminoverbindung), noch weitere Hilfsstoffe enthalten sein. Als optionale Hilfsstoffe können die erfindungsgemäßen wässrigen Dispersionen auch noch zusätzlich Stabilisatoren, Entschäumer, Verdickungsmittel, Thixotropierungsmittel, Netzmittel, Entschäumer, Farbstoffe und/oder Konservierungsmittel enthalten, letztere insbesondere um dadurch die Beständigkeit gegenüber Mikroorganismen und ähnlichem zu verbessern, und dadurch die Stabilität und Lagerfähigkeit der entsprechenden Produkte weiter zu erhöhen.

Besonders geeignete erfindungsgemäße, wässrige Dispersionen weisen die folgende Zusammensetzung auf, bezogen auf 100 Gewichtsteile des Klebers:
Bevorzugte wässrige Dispersion A):
   7 bis 25 Gewichtsteile mindestens eines Bindemittels in Dispersionsform;
   7 bis 27 Gewichtsteile mindestens eines wasserlöslichen Salzes der Phosphorsäure;
   3 bis 17 Gewichtsteile mindestens eines wasserlöslichen Kohlenhydrats;
   0 bis 12 Gewichtsteile mindestens eines wasserlöslichen Ammoniumsalzes und/oder mindestens einer Aminoverbindung;
Bevorzugte wässrige Dispersion B):
   10 bis 20 Gewichtsteile mindestens eines Bindemittels in Dispersionsform;
   10 bis 20 Gewichtsteile mindestens eines wasserlöslichen Salzes der Phosphorsäure;
   4 bis 12 Gewichtsteile mindestens eines wasserlöslichen Kohlenhydrats;
   0 bis 10 Gewichtsteile mindestens eines wasserlöslichen Ammoniumsalzes und/oder mindestens einer Aminoverbindung;
Bevorzugte wässrige Dispersion C):
   12 bis 16 Gewichtsteile mindestens eines Bindemittels in Dispersionsform;
   12 bis 17 Gewichtsteile mindestens eines wasserlöslichen Salzes der Phosphorsäure;
   5 bis 8 Gewichtsteile mindestens eines wasserlöslichen Kohlenhydrats;
   0 bis 7 Gewichtsteile mindestens eines wasserlöslichen Ammoniumsalzes und/oder mindestens einer Aminoverbindung;

In den obigen bevorzugten Zusammensetzungen A) bis C) können gegebenenfalls auch noch weitere Hilfsstoffe, wie hier beschrieben, in den erfindungsgemäßen wässrigen Dispersionen enthalten sein.

Die Menge der Hilfsstoffe liegt vorzugsweise im Bereich von 0 bis 3 Gewichtsteilen, bezogen auf die Gesamtmenge der wässrigen Dispersion, wobei diese Angabe jeweils auch für die bevorzugten wässrigen Dispersionen A), B) und C) gilt.

Der Feststoffgehalt der erfindungsgemäßen wässrigen Dispersionen liegt im Bereich von 20 bis 40 Gewichtsteilen, bevorzugt 24 bis 35 Gewichtsteilen, besonders bevorzugt 26 bis 33 Gewichtsteilen, wobei es sich beim restlichen Anteil um Wasser handelt. Die erfindungsgemäßen, wässrigen Dispersionen weisen vorzugsweise keine organischen Lösungsmittel auf.

Als bevorzugter Dämmstoff wird in der vorliegenden Erfindung generell ein Schaumstoffmaterial eingesetzt. Das Schaumstoffmaterial liegt vorzugsweise in Partikelform vor. Als Schaumstoffpartikel können insbesondere Polymerschaumpartikel aus thermoplastischen Polymeren verwendet werden. Hierfür sind insbesondere Styrolpolymere geeignet.

Erfindungsgemäß umfasst der Begriff "Styrolpolymer" Polymere auf Basis von Styrol, alpha-Methylstyrol oder Mischungen von Styrol und alpha-Methylstyrol. Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-alpha-Methlstyrol-Copolymere, Acrylnitril-Butadien-Styrolpolymerisate (ABS), Styrol-Acrylnitril-Copolymere (SAN), Acrylnitril-alpha-Methylstyrol-Copolymere (AMSAN), Acrylnitril-Styrol-Acrylester (ASA), Methylacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt. Erfindungsgemäße Styrolpolymere basieren auf mindestens 50 Gewichtsteilen Styrol und/oder alpha-Methylstyrol-Monomeren. Analog gilt dies für den Styrolanteil in SAN, AMSAN, ABS, ASA, MBS und MABS (siehe unten). Erfindungsgemäße Styrolpolymere basieren auf mindestens 50 Gewichtsteilen Styrol und/oder alpha-Methylstyrol-Monomeren.

Die genannten Styrolpolymere können zur Verbesserung der mechanischen Eigenschaften oder der Temperaturbeständigkeit, gegebenenfalls unter Verwendung von Verträglichkeitsvermittlern, mit thermoplastischen Polymeren, wie Polyamiden (PA), Polyolefinen wie Polypropylen (PP) oder Polyethylen (PE), Polyacrylaten wie Polymethylmethacrylat (PMMA), Polycarbonat (PG), Polyestern wie Polyethylenterephthalat (PET) oder Polybutylenterephthalat (PBT), Polyethersulfonen (PES), Polyetherketonen, Polyethersulfiden (PES) oder Mischungen davon in Anteilen von insgesamt bis maximal 30 Gewichtsteilen, bevorzugt im Bereich von 1 bis 10 Gewichtsteilen, bezogen auf 100 Gewichtsteile der Polymerschmelze, abgemischt werden. Des Weiteren sind Mischungen in den genannten Mengenbereichen auch mit zum Beispiel hydrophob modifizierten oder funktionalisierten Polymeren oder Oligomeren, Kautschuken wie Polyacrylaten oder Polydienen, zum Beispiel StyrolButadien-Blockcopolymeren oder biologisch abbaubaren aliphatischen oder aliphatisch/aromatischen Copolyestern möglich. Als Verträglichkeitsvermittler eignen sich zum Beispiel Maleinsäureanhydrid-modifizierte Styrolcopolymere, Epoxidgruppenhaltige Polymere oder Organosilane.

Besonders bevorzugt sind erfindungsgemäße Schaumstoffe enthaltend bzw. bestehend aus Polystyrol, insbesondere die kommerziell erhältlichen Typen Neopor^{®}, Styropor^{®} und Peripor^{®} (alle von der BASF SE, Ludwigshafen, Deutschland).

Besonders geeignet sind expandierte Styrolpolymere (EPS), vorzugsweise expandierte Styrolpolymere mit einem Molekulargewicht Mw im Bereich von 120.000 bis 400.000 g/mol, besonders bevorzugt im Bereich von 180.000 bis 300.000 g/mol, gemessen mittels Gelpermeationschromatographie nach DIN 55672-1 mit refraktiometrischer Detektion (RI) gegenüber Polystyrolstandards. Aufgrund des Molekulargewichtsabbaus durch Scherung und/oder Temperatureinwirkung liegt das Molekulargewicht des expandierten Polystyrols in der Regel etwa 10.000 g/mol unter dem Molekulargewicht des eingesetzten Polystyrols.

Bei der Herstellung der Polystyrole erfolgt die Polymerisation beispielsweise durch Massepolymerisation, Lösungspolymerisation oder durch Emulsions-, Suspensions- oder Dispersions- polymerisation. Bevorzugt ist die Suspensionspolymerisation.

Bei der Suspensionspolymerisation wird als Monomer bevorzugt Styrol allein eingesetzt. Es kann jedoch bis zu 20 % seines Gewichts durch andere ethylenisch ungesättigte Monomere wie Alkylstyrole, Divinylbenzol, Acrylnitril, 1,1-Diphenylether oder alpha-Methylstyrol ersetzt sein. Im Übrigen sind die Monomere bevorzugt, aus denen die bevorzugten Polymere erhältlich sind.

Die Herstellung der erfindungsgemäßen Partikelschaumkomponente erfolgt im Allgemeinen aus einer Polymerschmelze.

Der Polymerschmelze können auch Polymerrecyklate der genannten thermoplastischen Polymeren, insbesondere Styrolpolymere und expandierte Styrolpolymere (EPS) in Mengen zugemischt werden, die deren Eigenschaften nicht wesentlich verschlechtern, in der Regel in Mengen von maximal 50 Gewichtsteilen, insbesondere in Mengen von 1 bis 20 Gewichtsteilen, bezogen auf 100 Gewichtsteile des gesamten Styrolpolymers. Des Weiteren können der Polymerschmelze übliche Additive wie Keimbildner, Füllstoffe, Weichmacher, lösliche und unlösliche anorganische und/oder organische Farbstoffe und Pigmente, zum Beispiel IR-Absorber wie Ruß, Flockengraphit oder Aluminiumpulver, gemeinsam oder räumlich getrennt, zum Beispiel über Mischer oder Seitenextruder, zugegeben werden. In der Regel werden die Farbstoffe und Pigmente in Mengen im Bereich von 0,01 bis 30 Gewichtsteilen, bevorzugt im Bereich von 1 bis 5 Gewichtsteilen, bezogen auf 100 Gewichtsteile des gesamten Styrolpolymers zugesetzt. Zur homogenen und mikrodispersen Verteilung der Pigmente in dem Styrolpolymer kann es insbesondere bei polaren Pigmenten zweckmäßig sein, ein Dispergierhilfsmittel, zum Beispiel Organosilane, Epoxygruppen-haltige Polymere oder Maleinsäureanhydrid-gepfropfte Styrolpolymere einzusetzen. Bevorzugte Weichmacher sind Mineralöle, Phthalate, die in Mengen von 0,05 bis 10 Gewichtsteilen, bezogen auf 100 Gewichtsteile des gesamten Styrolpolymers eingesetzt werden können.

Die erfindungsgemäßen Styrolpolymerpartikel können auch ein oder mehrere, vorzugsweise halogenfreie, flammhemmende und/oder synergistische Verbindungen enthalten. Falls vorhanden, beträgt der Anteil solcher zusätzlicher flammhemmender Verbindungen üblicherweise 0,5 bis 5 Gewichtsteile, bezogen auf 100 Gewichtsteile des Styrolpolymers.

Die erfindungsgemäß eingesetzten expandierten Styrolpolymergranulate (EPS) weisen in der Regel eine Schüttdichte von höchstens 20 g/L, bevorzugt 5 bis 20 g/L, besonders bevorzugt 10 bis 15 g/L auf.

Die vorliegende Erfindung bezieht sich auch auf ein Verfahren zur Herstellung eines brandgeschützten Dämmstoffs umfassend die Schritte: Mischen eines expandierten Styrolpolymers mit der erfindungsgemäßen wässrigen Dispersion, Informbringen der erhaltenen Mischung, und Verfestigen der Mischung, vorzugsweise durch Trocknen der Mischung.

Das Vermischen des Styrolpolymermaterials, also bevorzugterweise der expandierten Polystyrolpartikel oder -perlen, mit der wässrigen Dispersion des Intumeszenzklebers erfolgt üblicherweise durch Versprühen der wässrigen Dispersion auf das Styrolpolymermaterial mit Hilfe von geeigneten Sprühvorrichtungen, durch die die wässrige Dispersion des Intumeszenzklebers in fein verteilter Form auf die Oberfläche des Styrolpolymermaterials aufgebracht wird.

Ein Vorteil der beanspruchten stabilen wässrigen Dispersionen der vorliegenden Erfindung ist hierbei, dass alle Komponenten wasserlöslich sind und daher auch bei längerer Lagerung und Aufbewahrung der wässrigen Dispersionen des Intumeszenzklebers es weder zu Sedimentationsproblemen noch beim Mischen bzw. Aufbringen der wässrigen Dispersion auf die Styrolpolymermaterialien zu den bisher bekannten Verstopfungen in den Leitungen und Sprühdüsen der hierfür eingesetzten Sprühvorrichtungen kommt. Außerdem zeigt sich beim Mischen bzw. Ausbringen der erfindungsgemäßen, wässrigen Dispersionen, dass es hierbei nicht mehr zu den früher üblichen Verdünnungs- bzw. Applikationsproblemen kommt, die sich aus der mangelnden Homogenität der bisher eingesetzten Kleber ergeben hatten. Ein weiterer Vorteil der erfindungsgemäßen wässrigen Dispersionen ist auch die hervorragende Lagerfähigkeit der entsprechenden wässrigen Formulierung, da ein relativ niedrige Dosierung an aktiven Komponenten im Intumeszenzkleber vorliegt, die aber trotzdem für eine ausreichende Verfestigung des Dämmstoffs sorgt und gleichzeitig hervorragende Brandschutzeigenschaften für die resultierenden Verbundstoffe ermöglicht. Das von herkömmlichen Intumeszenzklebern bekannte Problem der Sedimentation der Feststoffkomponenten nach bereits relativ kurzen Standzeiten kann mit Hilfe der erfindungsgemäßen wässrigen Dispersionen ebenfalls erstmals vermieden werden.

Das Styrolpolymer und die erfindungsgemäßen Dispersionen werden vorzugsweise in einem bestimmten Mischungsverhältnis gemischt. Das Mischungsverhältnis muss so gewählt sein, dass eine ausreichende Rieselfähigkeit des Styrolpolymermaterials gewährleistet bleibt, so dass eine einfache Befüllung im nachfolgenden Schritt noch gewährleistet bleibt. Bei der Einstellung eines geeigneten Mischungsverhältnisses von Polystyrol und wässriger Dispersion muss daher auch die Partikelgröße und Schüttdichte des Styrolpolymermaterials in Betracht gezogen werden.

Bevorzugte Mischungsverhältnisse von expandiertem Styrolpolymer zu Klebermaterial liegen üblicherweise im Bereich von 0.5 bis 10 zu einem Gewichtsteil, bevorzugterweise 1 bis 8 Gewichtsteilen, besonders bevorzugt 1.5 bis 5 Gewichtsteilen und ganz besonders bevorzugt 2 bis 4 Gewichtsteilen. Bei diesen Gewichtsverhältnissen und den zugrundeliegenden üblichen Dichten der beiden Komponenten von ca. 12 g/I expandiertem Styrolpolymer und 1100 g/I Kleber ergeben sich die folgenden bevorzugten Mischungs-Volumenverhältnisse.

Bevorzugte Volumenverhältnisse liegen im Bereich von 0.5 bis 30 cm³, bevorzugt, 1 bis 20 cm³, besonders bevorzugt 2 bis 15 cm³, und am meisten bevorzugt 3 bis 10 cm³, Intumeszenzkleber pro Liter expandiertem Styrolpolymer, insbesondere expandierte Polystyrolperlen. Am besten ist ein Volumenverhältnis von 4 bis 8 cm³ Intumeszenzkleber pro Liter expandiertem Styrolpolymer, insbesondere expandierte Polystyrolperlen. In diesen Verhältnissen erfüllen die Verbundmaterialien, die durch das Mischen und nachfolgende Trocknen des expandierten Styrolpolymeren und den erfindungsgemäßen wässrigen Dispersionen erhalten werden, die Vorgaben der Brandschutzklasse E nach EN 13501-1.

Das Informbringen der erhaltenden Mischung erfolgt vorzugsweise durch Befüllung eines Hohlraums mit der Mischung des expandierten Styrolpolymers mit der erfindungsgemäßen wässrigen Dispersion. Für das Befüllen können geeignete Einfüllhilfen wie beispielsweise Sprühhilfen, große Spritzen oder Schütttrichter eingesetzt werden.

Das Trocknen der Mischung führt zur Verfestigung der klebenden Polymerkompenente in der erfindungsgemäßen wässrigen Dispersion. Dadurch kommt es zur Fixierung bzw. Verbindung des expandieren Styrolpolymers, insbesondere der expandierten Styrolpartikel bzw. -perlen, im befüllten Hohlraum. Das Trocknen kann durch einfaches Trocknen lassen des gebildeten Verbundmaterials aus expandiertem Styrolpolymer und Intumeszenzkleber im befüllten Hohlraum erfolgen, also ohne zusätzliche Maßnahmen, oder durch unterstützende Maßnahmen wie das Inkontaktbringen des Dämmstoffs mit Luft oder erwärmter Luft, oder durch die Anwendung von Wärme mit einer dafür geeigneten Vorrichtung.

Das oben beschriebene Herstellverfahren führt durch die Verklebung eines expandierten Styrolpolymers mit der erfindungsgemäßen wässrigen Dispersion zu einem Verbundmaterial, welches die Wärmedämmungseigenschaften des expandierten Styrolpolymers mit den brandschützenden Eigenschaften beider Materialien, also des expandierten Styrolpolymers und des Intumeszenzklebers verbindet. Das erfindungsgemäße Verbundmaterial ist daher in der Lage, die Anforderungen an Produkte zu erfüllen, die in der Brandverhaltensklasse E der Brandschutznorm EN 13501-1 definiert sind.

Die vorliegende Erfindung bezieht sich auch auf ein Verbundmaterial, welches aus der wässrigen Dispersion und einem Dämmstoffmaterial hergestellt wird. In diesem Zusammenhang wird die wässrige Dispersion als Intumeszenzkleber eingesetzt, so dass ein geeignetes Dämmschutzmaterial mit dem Kleber verklebt wird. Das Verbundmaterial umfasst ein expandiertes Styrolpolymer und die wässrige Dispersion als Intumeszenzkleber, dadurch erhältlich, dass das expandierte Styrolpolymer, insbesondere expandierte Polystyrolperlen, mit der erfindungsgemäßen, wässrigen Dispersion gemischt wird, die erhaltene Mischung in Form gebracht wird und anschließend getrocknet wird. Das resultierende Verbundmaterial ist durch die Verklebung nicht mehr rieselfähig und wird daher vorzugsweise unmittelbar vor Ort durch Befüllen der Mischung vor ihrer Verfestigung in einem geeigneten Hohlraum eines Gebäudes gebildet.

Die vorliegende Erfindung bezieht sich daher auch auf die Verwendung der erfindungsgemäßen wässrigen Dispersion als Intumeszenzkleber bei der Verfestigung von Dämmstoffmaterialien, insbesondere solcher die aus expandierten Styrolpolymeren gebildet werden. Wie bereits oben beschrieben, beinhaltet die Verwendung des Intumeszenzklebers das Mischen, insbesondere das Aufbringen, des Intumeszenzklebers als wässrige Dispersion auf das expandierte Styrolpolymer, insbesondere auf expandiertes Polystyrol, welches vorzugsweise in rieselfähiger Form, also insbesondere als expandierte Polystyrolperlen vorliegt, das Informbringen der erhaltenen Mischung, vorzugsweise entweder durch Befüllen eines geeigneten Hohlraums mit der Mischung vor deren Verfestigung oder alternativ durch andere Formgebungsmaßnahmen bei denen Platten, Blöcke, Ziegel oder ähnliches des Verbundmaterials erhalten werden, die dann nachfolgend gelagert, transportiert und getrennt verbaut werden können.

Die erfindungsgemäßen wässrigen Dispersionen eignen sich daher für die Verwendung als klebende Komponente für die Herstellung von brandgeschützten Dämmstoffen, die durch Zugabe der zusätzlichen klebenden Komponente zu einem geeigneten Dämmschutzmaterial wie beispielsweise einem expandierten Styrolpolymer in Form gebracht bzw. fixiert werden können, so dass insbesondere Hohlräume in Gebäuden mit einem geeigneten Dämmstoff vollständig befüllt und vor nachfolgendem Ausrieseln geschützt werden können.

Die erfindungsgemäße Verwendung bezieht sich daher vorzugsweise auf den Einsatz der erfindungsgemäßen wässrigen Dispersionen als Intumeszenzkleber, dadurch gekennzeichnet, dass die wässrige Dispersion als flüssiger Kleber mit einem Dämmstoffmaterial gemischt wird, in Form gebracht und anschließend getrocknet wird, so dass auf diesem Wege ein brandgeschützter Dämmstoff erhalten wird.

Die Verwendung der erfindungsgemäßen, wässrigen Dispersionen bietet sich daher insbesondere bei der Fixierung von brandgeschützten Schaumstoffmaterialien wie expandierten Styrolpolymeren, insbesondere expandiertes Polystyrol, an, da dadurch nicht rieselfähige, fixierte und brandgeschützte Dämmstoffmaterialien mit hoher Wärmedämmleistung zur Verfügung gestellt werden können.

In einer bevorzugten Ausführungsform bezieht sich die erfindungsgemäße Verwendung daher auch auf den Einsatz des Dämmstoffs zur Dämmung von mehrschaligem Mauerwerk, insbesondere zweischaligen Wänden.

### Beispiele

### Beispiel 1: Herstellung eines brandgeschützten Formkörpers

67,5 g Wasser werden in einem Rührbehälter vorgelegt und hierin werden unter ständigem Rühren 15 g Monoammoniumphosphat gelöst. In dieser Salzlösung werden anschließend 5 g Saccharose gelöst um dann 12,5 g einer 50%igen Vinylacetat/VeoVa Dispersion zuzugeben. Abschließend wird noch ein Konservierungsmittel in der Intumeszenzmischung gelöst.

5 cm3 dieser Mischung werden auf 1000 cm3 EPS Perlen mit einem mittleren Außendurchmesser von 1,5 mm aufgetropft und mit Hilfe eines Rührspatels in einem Mischgefäß homogen auf der Oberfläche der Perlen verteilt.

Diese Mischung wird in eine Form eingebracht und bei Raumtemperatur getrocknet. Hierbei entsteht ein quaderförmiger, fragiler Formkörper, der die Bauproduktenklasse E nach EN 13501-1 erfüllt.

### Beispiel 2: Herstellung eines brandgeschützten plattenförmigen Körpers

63 g Wasser werden in einem Rührbehälter vorgelegt und hierin werden unter ständigem Rühren 16 g Monoammoniumphosphat gelöst. In dieser Salzlösung werden anschließend 5 g Saccharose und 1,5 g Harnstoff gelöst um dann 14,5 g einer 50 %igen Vinylacetat/VeoVa Dispersion zuzugeben.

6 cm3 dieser Mischung werden in einem Pflugscharmischer auf 1000 cm3 EPS Perlen mit Außendurchmesser 0,8 - 1,6 mm bei laufendem Mischaggregat aufgesprüht.

Diese Mischung wird in eine Form eingebracht und bei Raumtemperatur getrocknet. Hierbei entsteht ein plattenförmiger Körper welcher die Bauproduktenklasse E nach EN 13501-1 erfüllt.

## Patentansprüche

1. Wässrige Dispersion umfassend die folgenden Komponenten:
- mindestens ein Bindemittel in Dispersionsform
- mindestens ein wasserlösliches Salz der Phosphorsäure
- mindestens ein wasserlösliches Kohlenhydrat, das ein Disaccharid ist
- gegebenenfalls mindestens ein wasserlösliches Ammoniumsalz und/oder mindestens eine Aminoverbindung, wobei das mindestens eine Bindemittel in Dispersionsform eine stabilisierte Dispersion enthaltend ein Copolymerisat aus Vinylacetat und einem Vinylester einer weiteren langkettigen Carbonsäure, umfasst.

2. Wässrige Dispersion gemäß Anspruch 1, wobei das Vinylacetat-Copolymer ein Copolymer darstellt, welches durch Copolymerisation von Vinylacetat und einem Vinylester der Neodecansäure erhalten wird.

3. Wässrige Dispersion gemäß einem der vorhergehenden Ansprüche 1 bis 2, wobei das mindestens eine Bindemittel in Dispersionsform in einer Menge von 5 bis 40 Gewichtsteilen, vorzugsweise 10 bis 20 Gewichtsteile, bezogen auf die wässrige Dispersion, vorliegt.

4. Wässrige Dispersion gemäß einem der vorhergehenden Ansprüche 1 bis 3, wobei das mindestens eine wasserlösliche Salz der Phosphorsäure ein Ammoniumsalz der Phosphorsäure, vorzugsweise Monoammoniumphosphat, umfasst.

5. Wässrige Dispersion gemäß einem der vorhergehenden Ansprüche 1 bis 4, wobei die Menge an Monoammoniumphosphat 5 bis 30 Gewichtsteile, vorzugsweise 10 bis 20 Gewichtsteile, bezogen auf die wässrige Dispersion, beträgt.

6. Wässrige Dispersion gemäß einem der vorhergehenden Ansprüche 1 bis 5, wobei das mindestens eine wasserlösliche Kohlenhydrat, das ein Disaccharid ist, in einer Menge von 2 bis 20 Gewichtsteilen, vorzugsweise 3 bis 10 Gewichtsteilen, bezogen auf die wässrige Dispersion, vorliegt.

7. Wässrige Dispersion gemäß einem der vorhergehenden Ansprüche 1 bis 6, wobei das mindestens eine wasserlösliche Kohlenhydrat, das ein Disaccharid ist, Saccharose beinhaltet.

8. Wässrige Dispersion gemäß einem der vorhergehenden Ansprüche 1 bis 7, wobei das mindestens eine wasserlösliche Ammoniumsalz und/oder die mindestens eine Aminoverbindung in einer Menge von 0 bis 10 Gewichtsteilen, vorzugsweise 1 bis 5 Gewichtsteilen, bezogen auf die wässrige Dispersion, vorliegt.

9. Wässrige Dispersion gemäß einem der vorhergehenden Ansprüche 1 bis 8, wobei das mindestens eine wasserlösliche Ammoniumsalz und/oder die mindestens eine Aminoverbindung Harnstoff beinhaltet.

10. Verfahren zur Herstellung eines brandgeschützten Dämmstoffs umfassend die Schritte:
- Mischen eines expandierten Styrolpolymers mit der wässrigen Dispersion gemäß einem der Ansprüche 1 bis 9,
- Informbringen der erhaltenen Mischung, und
- Verfestigen der Mischung, vorzugsweise durch Trocknen der Mischung.

11. Verbundmaterial umfassend ein expandiertes Styrolpolymer und einen Intumeszenzkleber, dadurch erhältlich, dass das expandierte Styrolpolymer mit der wässrigen Dispersion gemäß einem der vorhergehenden Ansprüche 1 bis 9 gemischt wird, die erhaltene Mischung in Form gebracht wird und anschließend getrocknet wird.

12. Verwendung der wässrigen Dispersion gemäß einem der vorgehenden Ansprüche 1 bis 9 als Intumeszenzkleber, **dadurch gekennzeichnet, dass** die wässrige Dispersion als flüssiger Kleber mit einem Dämmstoffmaterial gemischt wird, in Form gebracht wird und anschließend getrocknet wird, um einen brandgeschützten Dämmstoff zu erhalten.

13. Verwendung gemäß Anspruch 12, wobei das Schaumstoffmaterial expandiertes Polystyrol umfasst und der Dämmstoff zur Dämmung von zweischaligem Mauerwerk eingesetzt wird.

## Claims

1. Aqueous dispersion comprising the following components:
- at least one binder in dispersion form
- at least one water-soluble salt of phosphoric acid
- at least one water-soluble carbohydrate which is a disaccharide
- optionally at least one water-soluble ammonium salt and/or at least one amino compound, wherein the at least one binder in dispersion form comprises a stabilized dispersion containing a copolymer of vinyl acetate and a vinyl ester of a further long-chain carboxylic acid.

2. Aqueous dispersion according to Claim 1, wherein the vinyl acetate copolymer is a copolymer which is obtained by copolymerization of vinyl acetate and a vinyl ester of neodecanoic acid.

3. Aqueous dispersion according to any one of the preceding Claims 1 to 2, wherein the at least one binder in dispersion form is present in an amount of 5 to 40 parts by weight, preferably 10 to 20 parts by weight, based on the aqueous dispersion.

4. Aqueous dispersion according to any one of the preceding Claims 1 to 3, wherein the at least one water-soluble salt of phosphoric acid comprises an ammonium salt of phosphoric acid, preferably monoammonium phosphate.

5. Aqueous dispersion according to any one of the preceding Claims 1 to 4, wherein the amount of monoammonium phosphate is 5 to 30 parts by weight, preferably 10 to 20 parts by weight, based on the aqueous dispersion.

6. Aqueous dispersion according to any one of the preceding Claims 1 to 5, wherein the at least one water-soluble carbohydrate which is a disaccharide is present in an amount of 2 to 20 parts by weight, preferably 3 to 10 parts by weight, based on the aqueous dispersion.

7. Aqueous dispersion according to any one of the preceding Claims 1 to 6, wherein the at least one water-soluble carbohydrate which is a disaccharide contains sucrose.

8. Aqueous dispersion according to any one of the preceding Claims 1 to 7, wherein the at least one water-soluble ammonium salt and/or the at least one amino compound is present in an amount of 0 to 10 parts by weight, preferably 1 to 5 parts by weight, based on the aqueous dispersion.

9. Aqueous dispersion according to any one of the preceding Claims 1 to 8, wherein the at least one water-soluble ammonium salt and/or the at least one amino compound contains urea.

10. Method for producing a fireproofed insulating material, comprising the following steps:
- mixing an expanded styrene polymer with the aqueous dispersion according to any one of Claims 1 to 9,
- shaping the mixture obtained, and
- solidifying the mixture, preferably by drying the mixture.

11. Composite material comprising an expanded styrene polymer and an intumescent adhesive, obtainable by mixing the expanded styrene polymer with the aqueous dispersion according to any one of the preceding Claims 1 to 9, shaping the mixture obtained and then drying it.

12. Use of the aqueous dispersion according to any one of the preceding Claims 1 to 9 as an intumescent adhesive, **characterized in that** the aqueous dispersion is mixed as a liquid adhesive with an insulant material, is shaped and then is dried to give a fireproofed insulating material.

13. Use according to Claim 12, wherein the foam material comprises expanded polystyrene and the insulating material is used for the insulation of double-leaf walling.

## Revendications

1. Dispersion aqueuse comprenant les composants suivants :
- au moins un liant sous forme de dispersion
- au moins un sel hydrosoluble de l'acide phosphorique
- au moins un hydrate de carbone hydrosoluble qui est un disaccharide
- éventuellement au moins un sel d'ammonium hydrosoluble et/ou au moins un composé amino, l'au moins un liant sous forme de dispersion comprenant une dispersion stabilisée contenant un copolymère d'acétate de vinyle et d'un ester vinylique d'un autre acide carboxylique à longue chaîne.

2. Dispersion aqueuse selon la revendication 1, dans laquelle le copolymère d'acétate de vinyle est un copolymère obtenu par copolymérisation d'acétate de vinyle et d'un ester vinylique d'acide néodécanoïque.

3. Dispersion aqueuse selon l'une quelconque des revendications 1 à 2 précédentes, dans laquelle l'au moins un liant sous forme de dispersion est présent en une quantité de 5 à 40 parties en poids, de préférence de 10 à 20 parties en poids, par rapport à la dispersion aqueuse.

4. Dispersion aqueuse selon l'une quelconque des revendications 1 à 3 précédentes, dans laquelle l'au moins un sel hydrosoluble de l'acide phosphorique comprend un sel d'ammonium de l'acide phosphorique, de préférence du phosphate monoammonique.

5. Dispersion aqueuse selon l'une quelconque des revendications 1 à 4 précédentes, dans laquelle la quantité de phosphate monoammonique est de 5 à 30 parties en poids, de préférence de 10 à 20 parties en poids, par rapport à la dispersion aqueuse.

6. Dispersion aqueuse selon l'une quelconque des revendications 1 à 5 précédentes, dans laquelle l'au moins un hydrate de carbone hydrosoluble qui est un disaccharide est présent en une quantité de 2 à 20 parties en poids, de préférence de 3 à 10 parties en poids, par rapport à la dispersion aqueuse.

7. Dispersion aqueuse selon l'une quelconque des revendications 1 à 6 précédentes, dans laquelle l'au moins un hydrate de carbone hydrosoluble qui est un disaccharide comprend du saccharose.

8. Dispersion aqueuse selon l'une quelconque des revendications 1 à 7 précédentes, dans laquelle l'au moins un sel d'ammonium hydrosoluble et/ou l'au moins un composé amino est présent en une quantité de 0 à 10 parties en poids, de préférence de 1 à 5 parties en poids, par rapport à la dispersion aqueuse.

9. Dispersion aqueuse selon l'une quelconque des revendications 1 à 8 précédentes, dans laquelle l'au moins un sel d'ammonium hydrosoluble et/ou l'au moins un composé amino comprend de l'urée.

10. Procédé de fabrication d'un matériau isolant ignifugé, comprenant les étapes consistant à :
- mélanger un polymère de styrène expansé avec la dispersion aqueuse selon l'une quelconque des revendications 1 à 9,
- mettre en forme le mélange obtenu, et
- consolider le mélange, de préférence par séchage du mélange.

11. Matériau composite comprenant un polymère de styrène expansé et un adhésif intumescent, pouvant être obtenu en mélangeant le polymère de styrène expansé avec la dispersion aqueuse selon l'une quelconque des revendications 1 à 9 précédentes, en mettant en forme le mélange obtenu, puis en le séchant.

12. Utilisation de la dispersion aqueuse selon l'une quelconque des revendications 1 à 9 précédentes en tant qu'adhésif intumescent, **caractérisée en ce que** la dispersion aqueuse en tant qu'adhésif liquide est mélangée avec un matériau isolant, est mise en forme et est ensuite séchée pour obtenir un matériau isolant ignifugé.

13. Utilisation selon la revendication 12, dans laquelle le matériau en mousse comprend du polystyrène expansé et le matériau isolant est utilisé pour isoler une maçonnerie à double paroi.
